# EUROPÄISCHE PATENTSCHRIFT

(11) **EP 1 206 982 B1**
(45) Veröffentlichungstag und Bekanntmachung des Hinweises auf die Patenterteilung: **21.07.2004**
(21) Anmeldenummer: 01250391.8
(22) Anmeldetag: 07.11.2001
(51) Int. Cl.: B21C 47/34, B23D 33/02, B23D 19/04

(54) **Rotierende Schere und Verfahren zum Abtrennen des Vorderschopfes und Hinterschopfes vom laufenden Walzgut**
Rotating shear for separating the head and tail ends of continuous rolled stock
Cisaille rotative pour séparer les extrémités avants et arrières de matériau laminé continu

(30) Priorität: 15.11.2000 DE 10057717
(43) Veröffentlichungstag der Anmeldung: 22.05.2002
(73) Patentinhaber: SMS Demag AG, 40237 Düsseldorf (DE)
(72) Erfinder: Hellenbrandt, Rainer, 47877 Willich (DE)
(74) Vertreter: Meissner, Peter E., Dipl.-Ing.

(56) Entgegenhaltungen:
- DD-A- 145 237
- DE-B- 1 627 270
- US-A- 3 727 498

## Beschreibung

Die Erfindung betrifft eine rotierende Schere zum Schopfen von schnelllaufendem Walzgut gemäß dem Oberbegriff des Patentanspruchs 1, sowie ein Verfahren zum Abtrennen des Vorderschopfes und des Hinterschopfes vom laufendem Walzgut mittels einer Schere nach Patentanspruch 1.

Rotierende Scheren der gattungsbildenden Art sind aus der DE-PS 16 27 270 und der DD-PS-145 237 bekannt.

Eine weitere Schere dieser Art zeigt die DE-OS 24 35 486, wobei hier die übliche Gesamtanlage auch gezeigt ist, die aus zwei hintereinander angeordneten Scheren besteht. Mittels der vorderen oder ersten Schere wird der Vorderschopf abgetrennt, während - nach dem Durchlauf des Walzgutes - der Hinterschopf dann von der zweiten Schere abgetrennt wird. Zur Ausführung der Schnittbewegung sind jeweils die vor den Scheren angeordneten Führungen schwenkbar gelagert, d.h. deren der Schere zugewandtes Ende ist - bezogen auf die jeweilige ortsfest angeordnete Schere - heb- und senkbar. Damit kann das Walzgut in den Schneidbereich der Ringmesser gebracht werden, wobei hierzu die vor der Schere angeordnete Führung nach oben geschwenkt wird.
Zur Aufnahme des Vorderschopfes bzw. Hinterschopfes sind ortsfest positionierte Führungen hinter den Scheren vorgesehen.

Durch den notwendigen Einsatz von zwei Scheren mit allen dazugehörenden Führungen, Antrieben sowie Steuerungen entstehen sehr hohe Anlagekosten, die selbstverständlich dann auch mit hohen Betriebs- und Wartungskosten verbunden sind. Darüberhinaus haben diese Anlagen einen großen Platzbedarf.

Der Erfindung liegt daher die Aufgabe zugrunde, eine Möglichkeit zu schaffen, mit der diese Kosten gesenkt werden können und der Platzbedarf verringert wird.

Gelöst wird diese Aufgabe durch die Patentansprüche 1 bzw. 2.

Erfindungsgemäß kommt nur eine Schere zum Einsatz, wobei diese sowohl das Abtrennen des Vorderschopfes wie auch des Hinterschopfes übernimmt. Welcher Teil abgetrennt und entsprechend abgefördert wird, bestimmt das Zusammenspiel des vor der Schere und hinter der Schere angeordneten Führungsteiles in Bezug auf die Schere bzw. die jeweilige Stellung der Ringmesser zueinander.

Dies soll nachfolgend an einem skizzierten Verfahrensablauf erläutert werden.

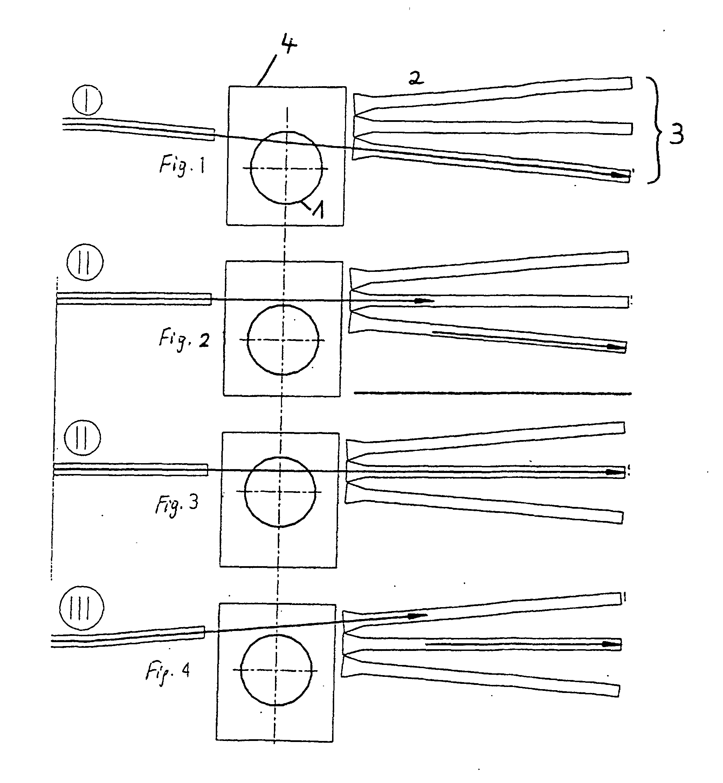

Die Figur 1 zeigt den Durchlauf des Walzgutanfang im freien Raum zwischen den Ringmessern. In dieser Ausgangsstellung ist das vordere Führungsteil in seiner unteren Stellung und die Schere in ihrer Grundstellung. Die Walzgutspitze läuft schräg nach unten in die untere der hinteren drei Führungen ein und gelangt so zur Häckselschere. Zum Abtrennen des Vorderschopfes wird nun das vordere Führungsteil bis zur Mitteistellung nach oben geschwenkt. Da die Ringmesser hierbei in ihrer Schnittposition stehen, erfolgt ein Abtrennen und der abgeschnittene Vorderschopf läuft weiter durch die untere Führung des hinteren Führungsteiles (Fig.2). Das nunmehr vom Vorderschopf befreite Walzgut wird durch die mittlere der drei hinteren Führungen waagerecht zum Windungsleger geführt.
Während des weiteren Durchlaufs des Walzgutes wird die Schere geöffnet, in ihre Hochstellung gefahren und anschließend werden die Ringmesser wieder aneinander gebracht, also in die Schnittstellung (Fig.3).

Zum Abtrennen des Hinterschopfes schwenkt das vordere Führungsteil in die obere Endstellung (Fig.4). Der Hinterschopf wird abgetrennt und durch die obere Führung des hinteren Führungsteiles zur Häckselschere geleitet.
Nach dem Verschwenken des vorderen Führungsteiles nach unten und Herunterfahren der Schere in die Grundstellung ist wieder die Ausgangsposition - wie in Figur 1 - erreicht.

## Patentansprüche

1. Rotierende Schere zum Schopfen von schnelllaufendem Walzgut, insbesondere Draht, mit zwei um ihre Achse mit gleicher Drehzahl rotierenden, axial schneidenden Ringmessern, deren gegeneinander gerichtete Stirnschneidkanten beim Schnittvorgang sowohl bis auf den zum Abtrennen des Walzgutes erforderlichen Abstand zusammengeführt sind als auch auf spitzwinklig zueinander angeordneten Ebenen liegen, die sich in einer Linie schneiden, wobei das der Schere auf einer Führung mit jeweils einem fluchtend vor und hinter den Ringmessern angeordneten Führungsteil zu- und von dieser ablaufende Walzgut durch Änderung der Relativlage zwischen Walzgut und Schneidkörper entweder durch den für den schnittfreien Walzgutdurchgang freien Raum zwischen den Ringmessern oder in den durch den Greifwinkel festgelegten keilförmigen Schneidbereich der Ringmesser führbar ist, in dem sich der Schnittvorgang unter tangentialer Mitnahme des Walzgutes durch die Ringmesser vollzieht, wobei das vor den Ringmessem angeordnete Führungsteil als Weiche ausgebildet ist, in deren unterer Endstellung das Walzgut durch den freien Raum und in deren oberer Endstellung das Walzgut tangential zu den Ringmessern führbar ist,
**dadurch gekennzeichnet,**
**dass** das Führungteil (2) hinter der Schere (1) als ortsfeste
3-fach Führung (3) ausgebildet ist, die zur Aufnahme des Vorderschopfes, des Hinterschopfes oder das ablaufenden Walzgutes ausgebildet ist und dass die Schere (1) in einem heb-und senkbaren Rahmen (4) gelagert ist, so dass deren Position relativ zu den ortsfesten hinteren Führungen (3) zwischen einer (unteren) Grundstellung und einer Hochstellung veränderbar ist.

2. Verfahren zum Abtrennen des Vorderschopfes und des Hinterschopfes vom laufende Walzgut mittels einer rotierende Schere nach Anspruch 1,
**gekennzeichnet durch** folgende Schritte:
- Einführen des Anfanges des laufenden Walzgutes mittels des vorderen Führungsteiles in den freien Raum zwischen den Ringmessern, wobei sich die Ringmesser in der Schnittstellung befinden und in das untere hintere Führungsteil,
- Schwenken des vorderen Führungsteiles nach oben zum Abtrennen des Vorderschopfes und Ableiten dieses in das untere Führungteil der hinteren Führung,
- Durchlaufen des Walzgutes oberhalb der Ringmesser in das mittlere Führungteil der hinteren Führung und Führen zum Windungsleger,
- Öffnen der Ringmesser und Verfahren der Schere in die Hochstellung,
- Schließen der Ringmesser zur Schnittstellung und anschließendes Verschwenken des vorderen Führungsteiles nach oben zum Abtrennen des Hinterschopfes und Abführen **durch** das obere Führungsteil der hinteren Führung,
- Verschwenken des vorderen Führungsteiles in die untere Endstellung und Zurückfahren der Schere in die untere Grundstellung zur Einstellung des Ausgangszustandes.

## Claims

1. Rotating shears for cropping rapidly moving rolled stock, especially wire, with two axially cutting circular blades which rotate about their axes at the same speed, the transverse cutting edges of which blades face the opposite way to each other and, in the cutting process, are both brought together up to the gap which is necessary to cut off the rolled stock and also lie at planes which are positioned at an acute angle to each other and which intersect at a line; whereby the rolled stock which moves up to and away from the shears can be fed to them - either through the space between the circular blades left clear for the non-cutting passing through of the rolled stock or into the wedge-shaped cutting area of the circular blades which is defined by the angle of bite - on a guide with a guide part which is positioned in alignment in each case in front of and behind the circular blades, by changing the relative positions of the rolled stock and the cutting element; the cutting process takes place while the rolled stock is being drawn in tangentially by the circular blades, the guide part which is positioned in front of the circular blades being in the form of a distributor guide, in the lower extreme position of which the rolled stock can be fed through the clear space, and in the upper extreme position of which the rolled stock can be fed tangentially to the circular blades,
**characterised in that**
the guide part (2) behind the shears (1) is in the form of a fixed 3-way guide (3) which is made to accept the head end, the tail end or the moving rolled stock, and **in that** the shears (1) are mounted in a frame (4) which can be raised and lowered, with the result that their position relative to the fixed rear guides (3) can be changed between a (lower) normal position and a top position.

2. Method for cutting off the head end and tail end of moving rolled stock by means of rotating shears as in Claim 1,
**characterised by** the following stages:
- introduction of the start of the moving rolled stock by means of the front guide part into the space between the circular blades, the circular blades being in the cutting position, and into the lower rear guide part,
- swivelling the front guide part upwards to cut off the head end, and diverting the latter into the lower guide part of the rear guide,
- moving the rolled stock above the circular blades into the middle guide part of the rear guide, and feeding it to the laying unit,
- opening the circular blades and moving the shears to the top position,
- closing the circular blades to the cutting position, and then swivelling the front guide part upwards in order to cut off the tail end and remove it through the top guide part of the rear guide,
- swivelling the front guide part to the lower extreme position and moving the shears back to the lower extreme position in order to set the starting condition.

## Revendications

1. Cisaille rotative destinée à ébouter un produit laminé se déplaçant à grande vitesse, notamment du fil métallique, comportant deux lames annulaires à coupe axiale tournant autour de leur axe à la même vitesse de rotation, dont les arêtes frontales tranchantes orientées l'une vers l'autre lors du processus de coupe, sont non seulement rapprochées jusqu'à l'écartement nécessaire à la séparation du produit laminé, mais sont également situées dans des plans disposés à angle aigu l'un par rapport à l'autre, qui se coupent en une ligne, le produit laminé amené à la cisaille et partant de cette dernière sur un guidage, comportant un élément de guidage disposé respectivement de façon alignée en amont et en aval des lames annulaires, pouvant être guidé par la modification de la position relative entre le produit laminé et les corps de coupe, soit à travers l'espace libre entre les lames annulaires pour le passage sans coupe du produit laminé, soit à travers la zone de coupe cunéiforme des lames annulaires définie par l'angle d'attaque, dans laquelle le processus de coupe est effectué moyennant l'entraînement tangentiel du produit laminé par les lames annulaires, l'élément de guidage disposé en amont des lames annulaires étant réalisé sous la forme d'un aiguillage, dans la position d'extrémité inférieure duquel le produit laminé peut être guidé à travers l'espace libre, et dans la position d'extrémité supérieure duquel le produit laminé peut être guidé de façon tangentielle vers les lames annulaires,
**caractérisée en ce que** l'élément de guidage (2) en aval de la cisaille (1) est réalisé sous forme d'un guidage triple (3) stationnaire, qui est agencé pour la réception du bout avant, du bout arrière ou du produit laminé partant, et **en ce que** la cisaille (1) est montée dans un cadre (4) pouvant être relevé et abaissé, de sorte que sa position par rapport aux guidages stationnaires aval (3) peut être modifiée entre une position de base (inférieure) et une position relevée.

2. Procédé destiné à la séparation du bout avant et du bout arrière d'un produit laminé en mouvement au moyen d'un cisaille rotative selon la revendication 1,
**caractérisé par** les phases suivantes :
- insertion du début du produit laminé en mouvement dans l'espace libre entre les lames annulaires au moyen de l'élément de guidage amont, les lames annulaires se trouvant dans la position de coupe, et dans l'élément de guidage aval,
- pivotement vers le haut de l'élément de guidage amont pour la séparation du bout avant et évacuation de celui-ci dans l'élément de guidage inférieur du guidage aval,
- passage du produit laminé au-dessus des lames annulaires dans l'élément de guidage central du guidage aval et guidage vers l'enrouleur,
- ouverture des lames annulaires et déplacement de la cisaille dans la position relevée,
- fermeture des lames annulaires pour la position de coupe et pivotement consécutif vers le haut de l'élément de guidage amont pour la séparation du bout arrière et évacuation par l'élément de guidage supérieure du guidage aval, et
- pivotement de l'élément de guidage amont dans la position inférieure et retour de la cisaille dans la position de base inférieure pour l'instauration de l'état initial.
